# FASCICULE DE BREVET EUROPEEN

(11) **EP 2 271 054 B1**
(45) Date de publication et mention de la délivrance du brevet: **04.06.2014**
(21) Numéro de dépôt: 10166778.0
(22) Date de dépôt: 22.06.2010
(51) Int. Cl.: H04L 29/08, H04L 29/06

(54) **Procédé de commande d'une entité d'un réseau distant à partir d'un réseau local**
Verfahren zur Steuerung einer Einheit von einem Fernnetzwerk aus einem lokalen Netzwerk
Method of controlling an entity of a remote network from a local network

(30) Priorité: 30.06.2009 FR 0954477
(43) Date de publication de la demande: 05.01.2011
(73) Titulaire: Orange, 75015 Paris (FR)
(72) Inventeur: Murphy, Vincent, 59110, La Madeleine (FR); Agro, Roberto, 92120, Montrouge (FR)

(56) Documents cités:
- EP-A1- 2 003 853
- US-A1- 2003 105 854
- US-A1- 2007 174 428

## Description

L'invention concerne le domaine des télécommunications et plus particulièrement un procédé de commande d'une entité d'un réseau distant à partir d'un réseau local.

Différentes technologies permettent d'établir une connexion d'un réseau à un autre, par exemple dans un but de commande d'une entité d'un réseau distant à partir d'un réseau local. Par exemple, les tunnels sécurisés VPN (Virtual Private Network). Une autre solution couramment utilisée consiste à faire appel à une architecture IMS (IP Multimedia Subsystem).

Dans le domaine des réseaux domestiques, le protocole UPNP s'impose comme un standard pour le partage, la diffusion et le contrôle des contenus numériques. Aujourd'hui, différents équipements conformes au standard UPNP (Universal Plug and Play) se répandent dans les foyers, et en particulier dans le domaine du multimédia avec les Media Servers (nommés par exemple PVConnect, Windows Media Player 11, ...), les Media Renderers (STB, DMA audio, IP-Radio, ...), et les Media Players (consoles de jeux, des cadres photo numériques, ...). Cependant les équipements d'un réseau UPnP ne sont pas conçus pour communiquer avec un équipement d'un autre réseau UPnP. En effet, le mécanisme de découverte d'entités UPnP utilise un envoi de commande en mode "multicast" (multidiffusion) qui ne permet que de découvrir des entités présentes dans un réseau local.

Les solutions à base de tunnel VPN ou architecture IMS existantes sont quant à elles relativement lourdes et complexes à mettre en oeuvre. En outre, avec les solutions à base de tunnel VPN, des problèmes de conflit d'adresses se posent. Les architectures IMS ne sont pas forcément mise à disposition librement des utilisateurs du grand public.

Un exemple relevant d'art antérieur est décrit par document US 2007/0174428.

Il apparaît ainsi un besoin pour une solution simple de mise en relation de deux réseaux, permettant la commande d'une entité d'un réseau distant à partir d'un réseau local et qui soit applicable pour une mise en communication d'un équipement UPnP d'un réseau avec un équipement d'un autre réseau UPnP.

Un des buts de l'invention est de remédier à des problèmes, inconvénients ou insuffisances de l'état de la technique et/ou d'y apporter des améliorations.

L'invention concerne, selon un premier aspect, un procédé de commande d'au moins une entité d'un réseau source distant à partir d'un réseau d'accueil local, le procédé étant mis en oeuvre au moyen d'un module relais, dit module relais nomade, conçu pour, lorsqu'il est exécuté par un équipement connecté au réseau d'accueil, communiquer avec un module relais, dit module relais source, exécuté par un équipement du réseau source et servant de relais de communication vis-à-vis de ladite au moins une entité, le procédé comprenant
- une étape de réception par le module relais nomade via une interface de commande, conforme à un premier protocole utilisable pour commander ladite entité à partir du réseau source, d'une première requête,
- une étape d'envoi du module relais nomade au module relais source, d'une deuxième requête destinée à être convertie par le module relais source en au moins une troisième requête conforme au premier protocole.

Cette invention propose un procédé permettant à un utilisateur de facilement commander une entité - par exemple une entité UPnP - d'un réseau distant à partir d'un terminal d'un réseau local, cette entité étant par exemple un serveur de contenu UPnP. Cet utilisateur peut ainsi accéder à l'ensemble de ses contenus à partir du réseau domestique local d'un ami ou membre du sa famille, et restituer ces contenus au moyen du terminal du réseau local.

Le module relais nomade présente une interface de commande conforme au protocole utilisable pour commander ladite entité à partir du réseau source et est en outre capable d'envoyer au module relais source des requêtes destinées à l'entité distante dans le réseau source. Il peut donc représenter cette entité dans le réseau d'accueil via cette interface de commande.

Enfin, la présence des deux modules relais coopérant permet donc un dialogue, conforme au premier protocole, d'entités du réseau d'accueil avec une ou plusieurs entités du réseau source.

Selon un mode de réalisation du procédé selon l'invention, ladite deuxième requête est émise conformément à un deuxième protocole distinct du premier protocole. Les deux modules source et nomade peuvent utiliser toute méthode de communication appropriée pour établir une liaison de communication du réseau source au réseau distant.

Selon un autre mode de réalisation du procédé selon l'invention, ledit module relais nomade est stocké sur un support d'enregistrement accessible à partir d'un équipement du réseau d'accueil. L'invention permet ainsi d'accéder au réseau source à partir de n'importe quel réseau d'accueil.

Le support d'enregistrement est par exemple une clé USB, dont le contenu est, après connexion à un terminal du réseau local accessible à partir de ce terminal. De manière extrêmement simple et pratique, l'utilisateur pourra en transportant cette clef USB accéder à des contenus de son réseau domestique.

Selon un autre mode de réalisation du procédé selon l'invention, le support d'enregistrement comprend en outre un module de connexion, dit module de connexion nomade, le procédé comprenant en outre une étape d'établissement, au moyen dudit module de connexion nomade, d'une liaison de communication avec un équipement d'accès au réseau distant, ladite deuxième requête étant transmise via ladite liaison de communication. Ainsi la liaison de communication avec le réseau d'accueil peut être établie de manière sécurisée, notamment au moyen d'un module de connexion autorisé à accéder au réseau source et disposant de données de connexion à ce réseau.

En particulier, selon encore un autre mode de réalisation du procédé selon l'invention, le support d'enregistrement est apte à être connecté audit terminal. Dans ce cas, pour garantir qu'un accès au réseau source sera possible, l'utilisateur peut transporter ce support contenant le ou les modules nécessaires à l'accès au réseau source et au pilotage de l'entité distante.

Selon un autre mode de réalisation du procédé selon l'invention, ladite entité est un serveur de contenus du réseau source distant, la première requête étant une requête d'obtention de métadonnées de contenus stockés dans ledit serveur de contenus. L'invention permet à différents utilisateurs de partager l'accès à leurs contenus.

Corrélativement, l'invention concerne un support d'enregistrement de données, accessible à partir d'un équipement d'un réseau d'accueil local, pour la mise en oeuvre d'un procédé de commande d'au moins une entité d'un réseau source distant,

ledit support d'enregistrement comprenant un module relais, dit module relais nomade, conçu pour, lorsqu'il est exécuté par un équipement connecté au réseau d'accueil, communiquer avec un autre module relais, dit module relais source, exécuté par un équipement du réseau source et servant de relais de communication vis-à-vis de ladite au moins une entité,

le module relais nomade étant apte à recevoir via une interface de commande, conforme à un premier protocole utilisable pour commander ladite entité à partir du réseau source, au moins une première requête et apte à envoyer au module relais source une deuxième requête destinée à être convertie par le module relais source en au moins une troisième requête conforme au premier protocole.

Selon un mode de réalisation, le support selon l'invention comprend en outre un module de connexion apte à établir une liaison de communication avec un équipement d'accès au réseau source.

Selon un mode de réalisation, sont mémorisées dans le support selon l'invention des données de connexion audit équipement d'accès destinées à être utilisées par ledit module de connexion.

Corrélativement, l'invention concerne un module relais, dit module relais nomade, pour la mise en oeuvre d'un procédé de commande d'au moins une entité d'un réseau source distant à partir d'un réseau d'accueil local,
le module relais nomade étant conçu pour, lorsqu'il est exécuté par un équipement connecté au réseau d'accueil, communiquer avec un module relais, dit module relais source, exécuté par un équipement du réseau source et servant de relais de communication vis-à-vis de ladite au moins une entité,
le module relais nomade étant apte à recevoir via une interface de commande, conforme à un premier protocole utilisable pour commander ladite entité à partir du réseau source, au moins une première requête et apte à envoyer au module relais source, une deuxième requête destinée à être convertie par le module relais source en au moins une troisième requête conforme au premier protocole.

Symétriquement, l'invention concerne un module relais, dit module relais source, pour la mise en oeuvre d'un procédé de commande d'au moins une entité d'un réseau source distant à partir d'un réseau d'accueil local,
le module relais source servant de relais de communication vis-à-vis de ladite au moins une entité et étant conçu pour, lorsqu'il est exécuté par un équipement du réseau source, communiquer avec un module relais, dit module relais nomade, exécuté par un équipement connecté au réseau d'accueil, apte à recevoir via une interface de commande, conforme à un premier protocole utilisable pour commander ladite entité à partir du réseau source, au moins une première requête,
le module relais source étant apte à recevoir en provenance du module relais nomade une deuxième requête destinée à être convertie en une troisième requête conforme au premier protocole.

Selon un mode de réalisation, le module relais source selon l'invention est apte, lorsque ladite troisième requête est une requête d'obtention de métadonnées de contenus stockés dans plusieurs serveurs de contenus, à agréger les métadonnées reçues des différents serveurs de contenus en réponse à la troisième requête.

Selon un mode de réalisation, le module relais source selon l'invention est apte, à adapter les adresses de contenus comprises dans les métadonnées reçues ou agrégées pour que ces adresses puissent être interprétées par un équipement du réseau d'accueil.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un dispositif selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel qu'à un composant matériel ou encore à un composant matériel programmable, avec ou sans processeur intégré.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. De la même manière, un composant matériel correspond à tout élément d'un ensemble matériel (ou hardware) apte à mettre en oeuvre une fonction ou un ensemble de fonctions, selon ce qui est décrit ci-dessous pour le module concerné.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un mode de réalisation du procédé selon l'invention.

L'invention est décrite plus en détail dans le cas de son application à la commande à distance, à partir d'un réseau d'accueil local, d'une entité sous forme de serveur de contenus situé dans un réseau source distant et d'une méthode d'accès aux contenus stockés par ce serveur.

Un tel serveur de contenus est par exemple un serveur de contenus conforme au standard UPnP (Universal Plug and Play). Un tel serveur de contenu est nommé "Digital Media Server" (DMS) dans le contexte de l'architecture UPnP. Toutefois le mécanisme proposé par l'invention est transposable à d'autres protocoles servant à la commande d'entités d'un réseau local.

L'invention est également applicable à la commande à distance d'autres types d'entités conformes au standard UPnP, notamment à la commande de dispositifs de restitution de contenu, nommés "Digital Media Renderer" (DMR) ou "Digital Media Player" (DMP), ou de dispositifs de commande nommés "Digital Media Controller" (DMC).

Le standard UPnP fournit des mécanismes et une architecture permettant une mise en relation, de type réseau de pairs, entre les entités UPnP. Chaque entité UPnP peut être intégrée physiquement dans un des terminaux du réseau local ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Le protocole UPnP utilise notamment les protocoles TCP/UDP/IP (Transmission Control Protocol/User Datagram Protocol/Internet Protocol) pour le transport des requêtes UPnP.

Une entité est dite entité UPnP si elle est conforme au standard UPnP ou à un autre standard équivalent ou dérivé, notamment si elle utilise un protocole de commande conforme à un tel standard.

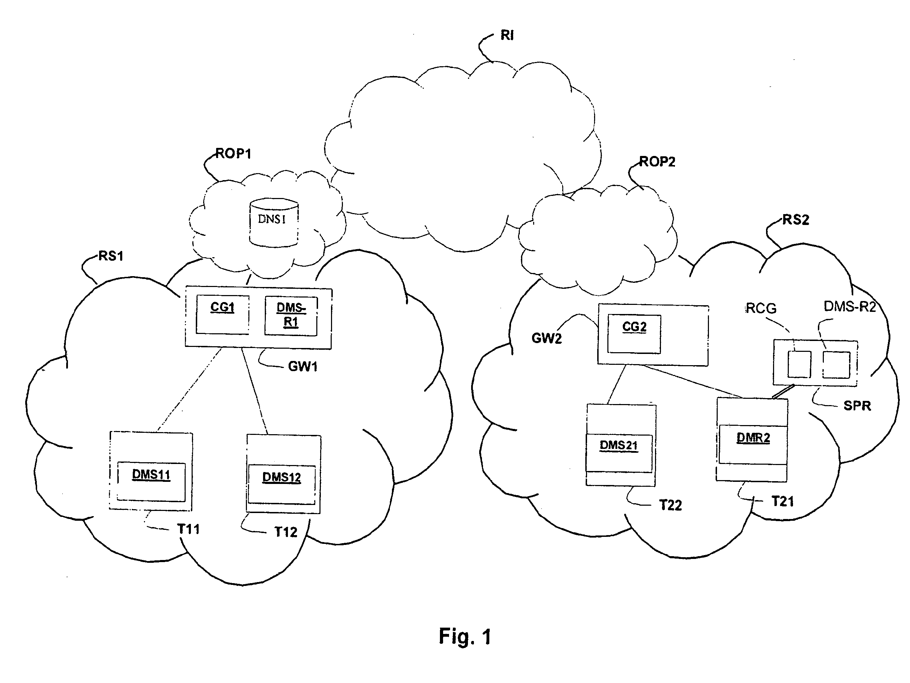

Le système représenté à la figure 1 est organisé autour, d'une part, d'un premier réseau local RS1dit réseau source, et, d'autre part, d'un deuxième réseau local RS2, dit réseau d'accueil, ces deux réseaux locaux étant interconnectés entre eux via un réseau étendu RI, par exemple le réseau Internet. Les réseaux locaux RS1 et RS2 sont par exemple des réseaux domestiques.

Ce système comprend les entités suivantes:
- un premier terminal T11 du réseau source RS1, hébergeant un serveur de contenus DMS11, conforme au standard UPnP;
- un deuxième terminal T12 du réseau source RS1, hébergeant un autre serveur de contenus DMS12, conforme au standard UPnP;
- une passerelle domestique GW1, servant de passerelle d'accès au réseau source RS1, hébergeant un module relais source DMS-R1, nommé également module relais source et un module d'interconnexion CG1 pour l'accès au réseau étendu RI;
- un serveur DNS1 de noms de domaine (Domain Name Serveur, DNS) présent dans un réseau opérateur ROP1 d'un opérateur de réseau, fournisseur de la passerelle domestique GW1, ce réseau opérateur formant réseau d'accès au réseau Internet pour le réseau source RS1;
- un premier terminal T21 du réseau d'accueil RS2, hébergeant un dispositif de restitution de contenus DMR2, sous forme de "Digital Media Renderer" ou de "Digital Media Player", conforme au standard UPnP;
- un deuxième terminal T22 du réseau d'accueil RS2, hébergeant un serveur de contenus DMS21, conforme au standard UPnP;
- une passerelle domestique GW2, servant de passerelle d'accès au réseau d'accueil RS2, hébergeant un module d'interconnexion CG2 pour l'accès au réseau étendu RI;
- un support d'enregistrement SPR, comprenant d'une part un module de connexion nomade RCG, utilisé pour établir une connexion au réseau source RS1 à partir d'un autre réseau et, d'autre part, un module relais DMS-R2 nommé également module relais nomade;

### Serveurs de contenus DMS11 et DMS12

Le serveur de contenus DMS11 (ou DMS12) est un serveur de contenus conforme au standard UPnP, ou "Digital Media Server" (DMS). En conséquence, il présente une interface de commande conforme au standard UPnP et est pilotable uniquement au moyen de requêtes UPnP. L'envoi d'une requête UPnP est réalisé usuellement au moyen d'un appel de fonction via une interface logicielle de programmation (API, Application Programming Interface) de l'entité destinataire.

### Passerelle GW1

La passerelle GW1 est une passerelle pour l'interconnexion du réseau source RS1 avec le réseau Internet RI. Elle permet aux terminaux du réseau source RS1 d'accéder au réseau Internet RI. Inversement, la passerelle permet - sous réserve que des droits pour un tel accès soient accordés - à des équipements d'un réseau autre que le réseau source RS1 de communiquer avec un terminal du réseau source RS1.

Le module d'interconnexion CG1 met en oeuvre les fonctions d'interconnexion entre le réseau source RS1 et le réseau Internet RI. Il comprend dans ce but une première interface de communication pour la communication avec les entités du réseau source RS1 et une deuxième interface de communication pour la communication via le réseau Internet RI, notamment avec les entités externes au réseau source RS1. Cette deuxième interface est utilisée pour communiquer avec un fournisseur d'accès à Internet (Internet Service Provider, ISP) de l'opérateur du réseau ROP, ainsi qu'avec le serveur de noms de domaine DNS1.

Le serveur DNS1 maintient une table de correspondance entre des adresses publiques et noms affectés aux équipements qu'il gère. En particulier, le nom affecté à la passerelle domestique GW1 est statique, c'est-à-dire ne change pas, mais l'adresse publique de la passerelle domestique GW1 changeant périodiquement, il est nécessaire pour communiquer avec cette passerelle domestique GW1 de connaître son adresse publique courante, et pour cela d'interroger le serveur DNS1 à partir du nom de la GW1. Ce nom correspond au nom du domaine réseau géré par cette passerelle, et est par exemple sous la forme:
myhome.homedns.org

Ce nom peut être affecté automatiquement par l'opérateur de réseau fournissant la passerelle domestique GW1 ou configuré manuellement par un utilisateur de cette passerelle.

La configuration du nom de domaine associé à la passerelle domestique GW1 est effectuée au moyen du module d'interconnexion CG1 qui communique dans ce but avec le serveur DNS1.

Le module d'interconnexion CG1 comprend en outre un module d'adressage sous forme de dispositif UPnP IGD (Internet Gateway Device) ou de CGI (Common Gateway Interface), en charge du mappage des adresses et ports publics vis-à-vis des adresses et ports privés des équipements du réseau source RS1, pour permettre à un dispositif extérieur au réseau source RS1 de communiquer avec un tel équipement de ce réseau source RS1 au moyen d'une adresse et/ou port public. Ce module d'adressage est utilisé notamment pour permettre une mise en communication du module relais nomade DMS-R2 avec le module relais source DMS-R1.

### Module relais source DMS-R1

Le module relais source DMS-R1 est une entité mandataire (entité proxy, selon la terminologie anglo-saxonne) associée à un ou plusieurs serveurs de contenus DMS11 et/ou DMS12: il sert d'intermédiaire de communication entre un serveur de contenus DMS11 (ou DMS12) et une entité non-conforme à UPnP et/ou ne faisant pas partie du réseau source. Le module relais source DMS-R1 sert ainsi de "représentant" du serveur de contenus DMS11 vis-à-vis d'une telle entité. Grâce à la présence du module relais source DMS-R1, le serveur de contenus DMS11 est pilotable à distance par une entité non-conforme à UPnP et/ou ne faisant pas partie du réseau source.

Plus précisément, le module relais source DMS-R1 met en oeuvre les fonctions d'un point de contrôle UPnP (DMC, Digital Media Controller), notamment les fonctions de détection d'un serveur de contenu UPnP et de consultation du répertoire de contenus (CDS, Content Directory Service) d'un serveur de contenu UPnP. Le module relais source DMS-R1 met en oeuvre deux interfaces:
- une première interface, conforme au protocole UPnP et correspondant à une interface de dispositif de commande UPnP (DMC, Digital Media Controller, nommé également "Point de contrôle UPnP"), pour d'une part envoyer des commandes UPnP à une entité UPnP du réseau source RS1, notamment à un des serveurs de contenus DMS11 ou DMS12 et d'autre part recevoir et traiter les réponses à ces requêtes;
- une deuxième interface, utilisant un protocole distinct du protocole UPnP et approprié pour envoyer ou recevoir des requêtes non UPnP échangées avec une entité non UPnP et/ou une entité ne faisant pas partie du réseau source RS1; Le protocole utilisé ici est par exemple le protocole HTTP.

Via cette deuxième interface, le module relais source DMS-R1 est apte à dialoguer avec le module relais nomade DMS-R2, décrit plus en détail ci-dessous, s'exécutant au sein d'un équipement du réseau d'accueil RS2. Ce dialogue s'effectue selon une méthode appropriée, par exemple au moyen d'appels de procédure distante ou au moyen d'une requête de type "web service", conforme à un protocole choisi par exemple parmi XML-RPC, SOAP et REST. Les requêtes échangées entre le module relais source DMS-R1 et le module relais nomade DMS-R2 sont dans ce cas transportées en utilisant le protocole HTTP.

Le module relais source DMS-R1 est configuré pour recevoir via sa deuxième interface des requêtes non conformes au protocole UPnP, destinées au serveur de contenus DMS11, pour convertir ces requêtes non-conformes à UPnP en requêtes conformes au protocole UPnP et transmettre via sa première interface les requêtes ainsi converties au serveur de contenus DMS11.

Cette conversion de format de requête s'effectue par exemple par désencapsulation d'une requête UPnP, ayant été encapsulée dans une requête conforme à un deuxième protocole. Ce deuxième protocole est par exemple le protocole HTTP. Cette opération de conversion de format ne modifie pas les données de la requête UPnP convertie, mais uniquement le format utilisé pour la transmettre. Notons ici qu'une transmission de requête conformément au protocole UPnP s'effectue généralement par appel de fonction d'une interface logicielle du module UPnP destinataire. Plus précisément, dans le standard UPnP, on parle d'invocation d'actions d'un service UPnP mis en oeuvre par le module UPnP destinataire (serveur de contenus UPnP, dispositif de restitution DMR ou DMP).

Un exemple de requête reçue via la deuxième interface est une requête d'obtention de métadonnées de contenus accessibles à partir d'un serveur de contenus UPnP du réseau source RS1. Le module relais source DMS-R1 est conçu pour convertir cette requête en une ou plusieurs requêtes, nommées "Browse" dans le standard UPnP, qui seront émises respectivement à destination des différents serveurs de contenus UPnP du réseau source RS1.

La conversion de format opérée sur une requête incidente par le module relais source DMS-R1, s'accompagne le cas échéant d'opérations telles que:
- modification ou filtrage des paramètres de la requête incidente et/ou
- ajout de nouveaux paramètres dans la ou les requêtes à émettre et/ou
- décomposition de la requête incidente en une ou plusieurs requêtes à émettre ou, inversement, combinaison de plusieurs requêtes incidentes en une seule requête à émettre.

Inversement, le module relais source DMS-R1 reçoit via sa première interface du serveur de contenus DMS11 des réponses à appel de fonction ou messages, incluant ou non des contenus stockés par ce serveur, conformes au protocole UPnP, les convertit en requêtes conformes à un autre protocole, approprié pour la communication avec une entité non-conforme à UPnP et/ou ne faisant pas partie du réseau source, et transmet via sa deuxième interface les requêtes ainsi converties à l'entité destinatrice. Cette conversion de format de requête s'effectue par exemple par encapsulation d'une requête UPnP, dans une requête conforme à un deuxième protocole. Ce deuxième protocole est par exemple le protocole HTTP. Cette conversion ne modifie pas les données de la requête UPnP convertie, mais uniquement le format utilisé pour la transmettre.

La conversion de format opérée à cet endroit par le module relais source DMS-R1 s'accompagne le cas échéant d'opérations telles que:
- modification ou filtrage des paramètres de la requête incidente et/ou
- ajout de nouveaux paramètres dans la ou les requêtes à émettre et/ou
- décomposition de la requête incidente en une ou plusieurs requêtes à émettre ou, inversement, combinaison de plusieurs requêtes incidentes en une seule requête à émettre.

Via sa deuxième interface, le module relais source DMS-R1 est apte également à recevoir et retransmettre des requêtes HTTP ne transportant pas de requête de type "web service". Il s'agit notamment de requêtes de transmission de contenus ou de requête d'obtention de contenu ne nécessitant pas de conversion vers une requête ou réponse UPnP.

Le module relais source DMS-R1 sert ainsi mandataire du serveur de contenus DMS11 (ou DMS12) pour l'envoi (respectivement la réception) de requêtes que ce serveur n'est pas apte à envoyer (respectivement recevoir) lui-même.

Le module relais source DMS-R1 est intégré dans la passerelle domestique GW1 ou dans un autre équipement du réseau source RS1. Il est bien entendu envisageable cependant que les différentes fonctions de ce module soit implémentées de manière répartie, c'est-à-dire dans des équipements physiques distincts, sous réserve qu'un lien de communication soit prévu entre les entités mettant en oeuvre respectivement chacune de ces fonctions.

Lorsque le module relais source DMS-R1 n'est pas intégré dans la passerelle domestique GW1, le module relais source DMS-R1 est conçu pour envoyer des données d'adressage au module d'adressage du module d'interconnexion CG1 afin que ce module d'adressage puisse router au module relais source DMS-R1 les requêtes qui lui sont destinées. Dans ce but, le module relais source DMS-R1 transmet au module d'adressage du module d'interconnexion CG1 un numéro de port et une adresse IP au moyen desquels le module relais source DMS-R1 est susceptible d'être joint. Ce numéro de port et adresse IP sont stockés en correspondance avec le nom de domaine associé à la passerelle domestique GW1 et un numéro de port public affecté au module relais source DMS-R1.

Lorsque le module relais source DMS-R1 est intégré dans la passerelle domestique GW1 aucun dispositif d'adressage n'est nécessaire dans la passerelle domestique GW1 pour joindre le module relais source DMS-R1 à partir d'un équipement externe au réseau source RS1.

Outre les conversions de format de requête du protocole UPnP vers un autre protocole de commande à distance utilisé entre les modules relais DMS-R1 et DMS-R2 ou vice-versa, le module relais source DMS-R1 met en oeuvre une fonction de traduction des adresses de contenus stockés par les serveurs de contenus DMS11 ou DMS12 du réseau source RS1.

Ceci permet de rendre accessible à partir du réseau d'accueil RS2 les contenus du réseau source RS1. Les adresses utilisées sont généralement sous forme d'adresse URI (Uniform Ressource Identifier), par exemple
http://192.168.1.10:9000/dlna/objectID=1234

La traduction d'adresse opérée par le module relais source DMS-R1 est nommée "traduction source". Elle consiste à remplacer, dans l'adresse URI d'un contenu, l'adresse IP et le port du serveur de contenu dans lequel est stocké ce contenu, par le nom de domaine public de la passerelle domestique GW1 et le numéro de port public affecté au module relais source DMS-R1, de manière à ce que l'adresse URI après traduction soit adaptée pour un accès à ce contenu via le module relais source DMS-R1 et via la passerelle domestique GW1, à partir d'une entité extérieure au réseau source RS1, notamment à partir du module relais nomade DMS-R2 s'exécutant dans un équipement d'un réseau d'accueil RS2 qui sera décrit plus loin.

Les adresses URI après traduction par le module relais source DMS-R1 seront donc sous la forme:
http://GW1 DNS:GW1 PORT/download?uri=CONTENT URI
où :
- CONTENT_URI est l'adresse originale URI du contenu, cette adresse comprenant usuellement l'adresse IP locale du serveur de contenus qui stocke ce contenu ainsi que des données identifiant le contenu proprement dit, par exemple sous la forme http://192.168.1.10:9000/dlna/ob*ectID=1234;
- GW1_IP est un nom de domaine ou une adresse IP publique statique affectée à la passerelle domestique GW1,;
- GW1_PORT est le port de la passerelle domestique GW1 via lequel le module relais source DMS-R1 peut être adressé.

L'adresse URI ainsi modifiée désigne donc le module relais source DMS-R1 comme serveur de contenus référençant le contenu, c'est-à-dire comme l'entité auprès de laquelle le contenu est susceptible d'être obtenu.

Une telle traduction d'adresse est nécessaire pour éviter d'éventuels conflits avec des serveurs de contenus ou contenus provenant d'un autre réseau, notamment avec ceux du réseau d'accueil RS2. Elle est opérée sur les adresses URI contenues dans des requêtes émises par le module relais source DMS-R1 à destination du réseau d'accueil RS2.

Cette opération de traduction d'adresse est susceptible d'être opérée par le module relais source DMS-R1, dans la mesure où celui-ci a connaissance des paramètres GW1_IP et GW1_PORT.

La transformation inverse, consistant à extraire les adresses URI avant transformation est opérée lorsqu'une requête, émise en provenance du réseau d'accueil RS2, parvient au module relais source DMS-R1. Cette transformation inverse permet donc de restituer l'adresse CONTENT_URI originale, c'est-à-dire l'adresse telle que fournie par le serveur de contenus référençant ce contenu.

Le module relais source DMS-R1 est en outre conçu pour collecter et agréger les métadonnées de contenus associées à des contenus stockés par différents serveurs de contenus DMS11 ou DMS12 du réseau source RS1. Lorsque ces métadonnées comprennent des adresses URI de contenus, une traduction de ces adresses est opérée avant ou après agrégation par le module relais source DMS-R1 selon ce qui vient d'être décrit, par application de la fonction "traduction source". Les métadonnées ainsi modifiées sont transmises vers le module relais nomade DMS-R2.

### Passerelle GW2

La passerelle GW2 est une passerelle pour l'interconnexion du réseau source RS2 avec le réseau Internet RI. Elle permet aux terminaux du réseau source RS2 d'accéder au réseau Internet RI. Inversement, la passerelle permet - sous réserve que des droits pour un tel accès soient accordés - à des équipements d'un réseau autre que le réseau source RS2 de communiquer avec un terminal du réseau source RS2.

Le module d'interconnexion CG2 met en oeuvre les fonctions d'interconnexion entre le réseau source RS2 et le réseau Internet RI. Il comprend dans ce but une première interface de communication pour la communication avec les entités du réseau source RS2 et une deuxième interface de communication pour la communication via le réseau Internet RI, notamment avec les entités externes au réseau source RS2.

### Support d'enregistrement SPR

Le support d'enregistrement est un support convenant pour le stockage de modules logiciels. Il s'agit d'un support accessible en lecture à partir d'au moins un équipement du réseau d'accueil RS2, par exemple:
- un support d'enregistrement portable et amovible, apte à être raccordé - par liaison filaire ou non filaire - à un terminal ou un autre équipement (set-top-box, routeur, passerelle, etc) du réseau d'accueil RS2 pour être lu par ce terminal ou cet équipement: clef USB, téléphone mobile, disque dur amovible, etc;
- un support d'enregistrement fixe, accessible à partir d'un terminal ou d'un équipement du réseau d'accueil RS2 via une liaison de communication établie à travers un réseau filaire ou non filaire: espace de stockage accessible via un serveur distant, les modules stockés sur cet espace de stockage étant dans ce cas téléchargés vers le terminal du réseau d'accueil RS avant d'être exécuté par ce terminal;

Les module de connexion nomade RCG et module relais nomade DMS-R2, stockés sur le support d'enregistrement SPR sont stockés sous forme de code source, code objet, ou dans une forme partiellement compilée sous forme de code interprétable : ils sont destinés à être chargés en mémoire d'un équipement du réseau d'accueil RS2 afin d'être exécutés par un processeur d'un tel équipement - après une éventuelle interprétation ou compilation nécessaire pour disposer d'un code exécutable.

Dans le cas où le support d'enregistrement SPR est intégré dans un équipement doté d'un processeur apte à exécuter module de connexion nomade RCG ou module relais nomade DMS-R2, l'exécution de l'un ou l'autre de ces modules peut être prise en charge par ce processeur. Dans le cas général, on suppose qu'une liaison est établie entre ce support et un équipement hôte du réseau d'accueil, doté d'un processeur et de mémoire, et que l'exécution de ces modules est prise en charge par le processeur de l'équipement hôte.

De préférence, le support d'enregistrement SPR sera un support à accès sécurisé afin que seuls des utilisateurs autorisés puissent accéder au contenu de ce support: un mot de passe, code PIN ou toute autre donnée d'authentification sera requise pour l'accès au contenu mémorisé sur ce support.

### Module de connexion nomade RCG

Le module de connexion nomade RCG est destiné à être exécuté par un équipement connecté au réseau d'accueil RS2. Dans ce but, il est stocké sur le support d'enregistrement SPR, accessible à partir d'au moins un équipement du réseau d'accueil RS2. Dans la mesure où le module de connexion nomade RCG est susceptible d'être utilisé dans différents réseaux d'accueil, ce module a été nommé module de connexion nomade.

Le module de connexion nomade RCG est conçu pour établir, via le module d'interconnexion CG2 de la passerelle GW2, une liaison de communication avec le module d'interconnexion CG1 de la passerelle GW1 du réseau source RS1.

Le module de connexion nomade RCG communique avec ce module d'interconnexion CG1 par exemple au moyen de requêtes HTTP transmises via une telle liaison. Pour raisons de sécurité, il est préférable cependant que le module de connexion nomade RCG utilise le protocole HTTPS - ou tout autre protocole sécurisé - pour communiquer avec le module d'interconnexion CG1. Optionnellement est prévue une authentification du module de connexion nomade RCG, au moyen :
- soit de données d'authentification du module de connexion nomade RCG stockée sur le support d'enregistrement SPR,
- soit de données d'authentification d'un utilisateur demandées à l'utilisateur suite à l'initialisation de la connexion entre le support d'enregistrement SPR et un terminal T21 ou T22 du réseau d'accueil RS2.

L'utilisation du protocole HTTPS implique que les requêtes HTTP reçues par le module de connexion nomade RCG soient encapsulées dans des requêtes conformes au protocole HTTPS et transmises sous cette forme au module d'interconnexion CG1. Inversement, à réception d'une requête HTTPS en provenance du module d'interconnexion CG1, le module de connexion nomade RCG dés-encapsule cette requête pour générer une requête conforme au protocole HTTP, puis la transmet au module relais nomade DMS-R2 qui sera décrit ci-dessous.

En alternative à l'utilisation d'un protocole sécurisé tel que HTTPS, il est également envisageable, pour la sécurisation de la liaison entre le module de connexion nomade RCG et le module d'interconnexion CG1, de procéder à l'établissement d'un tunnel sécurisé (VPN, Virtual Private Networking).

Le module relais nomade DMS-R2 est conçu de sorte que toutes les communications établies avec une entité du réseau source RS1 transitent par le module de connexion nomade RCG et le module d'interconnexion CG1, et utilisent la liaison de communication sécurisée établies entre le module de connexion nomade RCG et le module d'interconnexion CG1. Ce qui permet de sécuriser les échanges avec ce réseau source.

De préférence, le module de connexion nomade RCG établit, dès son initialisation, une liaison de communication sécurisée avec le CG1, cette liaison étant utilisée pour tous les échanges entre le module relais nomade DMS-R2 et une entité du réseau source.

En outre, dans le cas où un proxy de communication est utilisé pour l'accès au réseau d'accueil RS2, le module de connexion nomade est conçu pour déterminer les paramètres réseaux nécessaires pour établir une communication vers l'extérieur du réseau d'accueil RS2, à partir des paramètres réseaux définis dans l'équipement hôte exécutant le module de connexion nomade RCG.

### Module relais nomade DMS-R2

Le module relais nomade DMS-R2 est destiné à être exécuté par un équipement connecté au réseau d'accueil RS2. Dans ce but, il est stocké sur le support d'enregistrement SPR, accessible à partir d'au moins un équipement du réseau d'accueil RS2. Dans la mesure où le module relais nomade DMS-R2 est susceptible d'être utilisé dans différents réseaux d'accueil, il sera nommé module relais nomade.

Le module relais nomade DMS-R2 est conçu pour coopérer avec le module relais source DMS-R1 en vue de la mise en relation d'entités UPnP du réseau d'accueil RS2 avec une ou des entités du réseau source RS1. Tout comme le module relais source DMS-R1, le module relais nomade DMS-R2 présente une première interface de communication conforme à UPnP et une deuxième interface de communication non UPnP.

La première interface, conforme au protocole UPnP, correspond à une interface logicielle de serveur de contenus UPnP (DMS, Digital Media Serveur), pour d'une part recevoir des requêtes UPnP en provenance d'une entité UPnP du réseau d'accueil RS2, et d'autre part recevoir et traiter les réponses à ces requêtes. Cette interface permet notamment l'activation de fonctions des services définis dans le standard UPnP pour un serveur de contenus UPnP.

En outre, le module relais nomade DMS-R2 met en oeuvre les fonctions prévues dans le mécanisme de découverte du standard UPnP pour être reconnu en tant que serveur de contenus UPnP local et ainsi recevoir via sa première interface les requêtes UPnP destinées à l'un au moins des serveurs de contenus UPnP du réseau source RS1.

Dans ce but, le module relais nomade DMS-R2 déclare des capacités qui sont celles des serveurs de contenus UPnP du réseau source RS1, c'est-à-dire les "services" - au sens du standard UPnP - proposés par ces serveurs.

De manière connue, le protocole de découverte prévu dans le standard UPnP se déroule comme suit. Lorsque le module relais nomade DMS-R2 est initialisé et se connecte au réseau RS2, il se signale aux dispositifs UPnP de ce réseau par l'envoi d'un message M1 indiquant sa présence. Un tel message M1 est usuellement un message 'alive' conforme au protocole SSDP (Simple Service Discovery Protocol). Pour la définition de ces messages, on peut par exemple se référer au document nommé "draft-cai-ssdp-v1-02" de l'IETF ('Internet Engineering Task Force'). Ce message M1 est diffusé dans le réseau en mode multicast. De ce fait, il est reçu par le dispositif de restitution DMR2 ou par tout "Point de contrôle" UPnP qui se trouverait dans le réseau RS2. Ainsi, pour les entités UPnP du réseau RS2, tout se passe comme si ce module relais nomade DMS-R2 était effectivement un serveur de contenus UPnP, localisé dans ce réseau RS2.

La deuxième interface, utilise un protocole distinct du protocole UPnP et approprié pour envoyer ou recevoir des requêtes non UPnP échangées avec une entité ne faisant pas partie du réseau d'accueil RS2. Le protocole utilisé ici est par exemple le protocole HTTP.

Via sa deuxième interface, le module relais nomade DMS-R2 est apte également à recevoir et retransmettre des requêtes HTTP ne transportant pas de requête de type "web service". Il s'agit notamment de requêtes de transmission de contenus ou de requête d'obtention de contenu ne nécessitant pas de conversion vers une requête ou réponse UPnP.

Pour raisons de sécurité, le module relais nomade DMS-R2 communique avec le module relais source DMS-R1 par l'intermédiaire du module de connexion nomade RCG.

Tout comme le module relais source DMS-R1, le module relais nomade DMS-R2 met en oeuvre une fonction de traduction des adresses de contenus fournies par le module relais source DMS-R1. Ceci permet de rendre accessible à partir du réseau d'accueil RS2 les contenus du réseau source RS1 via les modules relais DMS-R1 et DMS-R2.

La traduction d'adresse opérée par le module relais nomade DMS-R2 est nommée "traduction nomade". Elle consiste à remplacer dans l'adresse URI d'un contenu, l'adresse IP et le port du serveur désigné dans cette adresse - c'est-à-dire de l'entité auprès de laquelle le contenu peut être obtenu - par l'adresse IP et le port du module de connexion nomade RCG. Cette adresse IP est en fait l'adresse de l'équipement du réseau d'accueil RS2 qui exécute le module de connexion nomade RCG et module relais nomade DMS-R2, le port étant un port de communication affecté au module de connexion nomade RCG.

En alternative, au lieu de désigner le module de connexion nomade RCG, l'adresse URI traduite désigne le module relais nomade DMS-R2. Les rôles du module de connexion nomade RCG et du module relais nomade DMS-R2 sont en effet interchangeables concernant la traduction des adresses et l'interception / le traitement des requêtes d'accès contenant ces adresses traduites.

Quelle que soit l'alternative choisie, il est seulement requis que l'entité désignée dans l'adresse URI traduite soit apte à communiquer avec le module relais source DMS-R1, destinataire visé pour les requêtes d'accès à un contenu susceptibles d'être émises à partir du réseau d'accueil RS2.

Les adresses URI après traduction par le module relais nomade DMS-R2 seront donc sous la forme:
http://RCG IP:RCG PORT/download?uri=CONTENT URI R1
où :
- CONTENT_URI_R1 est l'adresse URI telle que fournie par le module relais source DMS-R1,
- RCG_IP est l'adresse IP du module de connexion nomade RCG,
- RCG_PORT est le port du module de connexion nomade RCG.

L'adresse URI ainsi modifiée désigne donc le module de connexion nomade RCG comme serveur de contenus référençant le contenu, c'est-à-dire comme l'entité auprès de laquelle le contenu considéré est susceptible d'être obtenu.

Cette traduction d'adresse est opérée sur les adresses URI contenues dans des requêtes provenant du module relais source DMS-R1 et parvenant au module relais nomade DMS-R2.

La transformation inverse, consistant à extraire les adresses URI telles qu'elles étaient avant la "traduction nomade" - c'est-à-dire à extraire l'adresse CONTENT_URI_R1 telle que fournie par le module relais source - est opérée sur les adresses URI contenues dans une requête, émise en provenance du réseau d'accueil RS2, parvenant au module relais source DMS-R2 ou au module de connexion nomade RCG et devant être transférée au module relais source DMS-R1. Cette opération inverse est effectuée soit par le module relais source DMS-R2, soit par le module de connexion nomade RCG.

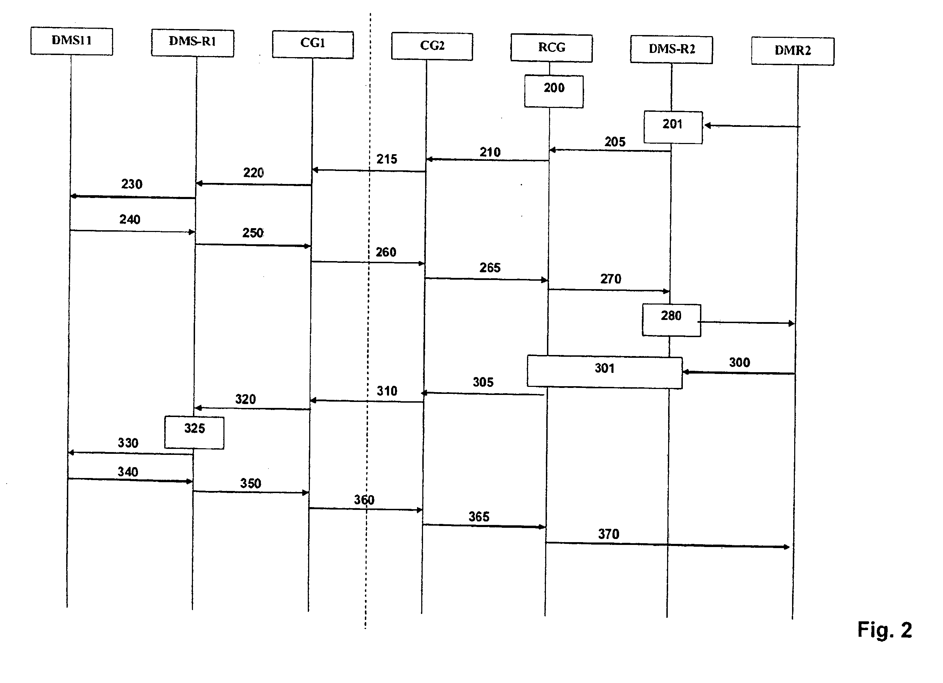

Un mode de réalisation du procédé selon l'invention est maintenant décrit par référence à la figure 2. Ce procédé comprend les étapes 200 à 340. Cet ensemble d'étapes est susceptible d'être exécuté un nombre quelconque de fois, à chaque fois qu'un accès à un contenu du réseau source RS1 à partir d'un équipement du réseau d'accueil RS2 est souhaité.

L'étape 200 est une étape d'initialisation. Lors de cette étape, un utilisateur connecte le support d'enregistrement SPR à un terminal hôte, le terminal T21 par exemple. Après connexion, l'exécution du module de connexion nomade RCG est automatiquement déclenchée par un processeur du terminal hôte T21.

L'utilisateur est invité à fournir des données d'authentification, par exemple un identifiant et mot de passe. Le module de connexion nomade envoie une demande de connexion au module d'interconnexion CG1 du réseau source RS1, comprenant les données d'authentification fournies par l'utilisateur. En cas d'authentification réussie, une liaison de communication sécurisée est établie entre le module de connexion nomade RCG et le module d'interconnexion CG1 et l'étape 201 suivante est exécutée. Dans le cas contraire, un message d'erreur est présenté à l'utilisateur et le procédé se termine. Le cas échéant, l'utilisateur est invité à saisir de nouvelles données d'authentification.

A l'étape 200, l'exécution du module relais nomade DMS-R2 est déclenchée automatiquement par le processeur du terminal hôte T21. Le module relais nomade DMS-R2 avertit, conformément au mécanisme de découverte UPnP, les points de contrôle UPnP (Digital Media Controller) du réseau d'accueil RS2 de sa présence et de ses capacités: il est alors vu comme un serveur de contenus UPnP local. En l'occurrence, le module relais nomade DMS-R2 se présente avec des capacités qui sont celles des serveurs de contenus UPnP du réseau source RS1 qu'il représente.

A l'étape 201, une requête UPnP, nommée "Browse", pour l'obtention de métadonnées de contenus des serveurs de contenus du réseau source RS1 est émise par un dispositif de restitution UPnP, par exemple par le dispositif de restitution DMR2, localisé dans le terminal T21 et reçue par le module relais nomade DMS-R2. Cette requête déclenche une procédure d'obtention de métadonnées, correspondant aux étapes 205 à 280 suivantes. En alternative, cette même procédure d'obtention de métadonnées pourrait être déclenchée automatiquement, sans qu'une requête "Browse" soit reçue d'un dispositif de restitution DMR2 ou d'un point de contrôle UPnP: soit à l'initialisation du module relais nomade DMS-R2, soit de manière périodique.

La requête UPnP "Browse" est convertie en une autre requête, apte à être transmise au module relais source DMS-R1. L'envoi de cette autre requête utilise la méthode de communication choisie pour le dialogue entre les modules relais DMS-R1 et DMS-R2. Cette autre requête est dans ce cas transportée en utilisant le protocole HTTP. On suppose dans la suite de la description, que les modules relais DMS-R1 et DMS-R2 communiquent entre eux par requête de type Web service.

A l'étape 205, cette requête HTTP d'obtention de métadonnées, est interceptée par le module de connexion nomade RCG qui l'encapsule dans une requête HTTPS.

A l'étape 210, la requête HTTPS d'obtention de métadonnées encapsulée est transmise par le module de connexion nomade RCG à travers la liaison sécurisée établie à l'étape 200 et parvient au module d'interconnexion CG1.

A l'étape 220, la requête HTTPS d'obtention de métadonnées encapsulée est dés-encapsulée par le module d'interconnexion CG1, puis transmise sous forme de requête HTTP au module relais source DMS-R1.

A l'étape 230, la requête HTTP d'obtention de métadonnées parvient au module relais source DMS-R1 qui la dés-encapsule. La requête dés-encapsulée est donc une requête UPnP "Browse" identique à la requête UPnP d'obtention de métadonnées émise à l'étape 201 par le dispositif de restitution DMR2. Le module relais source DMS-R1 traite ensuite cette requête: le traitement opéré consiste à émettre aux serveurs de contenus UPnP du réseau une requête UPnP pour l'obtention des métadonnées des contenus accessibles respectivement via chacun de ces serveurs de contenu. En l'occurrence, une requête UPnP nommée "Browse" est envoyée à chacun des serveurs de contenus DMS11 et DMS12.

A l'étape 240, à réception des réponses UPnP des serveurs de contenus DMS11 et DMS12, le module relais source DMS-R1 agrège les métadonnées reçues des différents serveurs de contenus DMS11 ou DMS12 du réseau source RS1. Le module relais source DMS-R1 effectue, selon ce qui a été décrit plus haut pour ce module, une traduction ("traduction source") des adresses URI de contenus contenues dans ces métadonnées, de manière à ce que ces adresses soient utilisables par un module UPnP du réseau d'accueil RS2. En l'occurrence, compte tenu de la nature de cette traduction, ces adresses traduites désignent toutes le module relais source DMS-R1 comme entité auprès de laquelle ces contenus peuvent être obtenus.

A l'étape 250, le module relais source DMS-R1 génère une requête de réponse à la requête reçue à l'étape 220, selon le même protocole ou la même méthode que celui ou celle utilisée pour l'envoi de cette requête, c'est-à-dire par requête de type "web service". Cette requête de réponse est dans ce cas transportée conformément au protocole HTTP. Elle comprend les métadonnées telles qu'agrégées et modifiées à l'étape 240.

A l'étape 260, la requête de réponse HTTP, générée à l'étape 250, est reçue par le module de d'interconnexion CG1 qui l'encapsule dans une requête conforme au protocole HTTPS avant de la transmettre via la liaison de communication sécurisée établie avec le module de connexion nomade RCG.

A l'étape 270, la requête de réponse HTTPS parvient au module de connexion nomade RCG qui la dés-encapsule, puis émet la requête de réponse dés-encapsulée, sous forme de requête HTTP, à destination du module relais nomade DMS-R2.

A l'étape 280, le module relais nomade DMS-R2 traite la requête de réponse HTTP reçue. Il effectue, selon ce qui a été décrit plus haut pour ce module, une traduction ("traduction nomade") des adresses URI de contenus contenues dans ces métadonnées, de manière à ce que ces adresses soient utilisables par un module UPnP du réseau d'accueil RS2 uniquement en passant par le module relais nomade DMS-R2 et le module de connexion nomade RCG associé. En l'occurrence, compte tenu de la nature de cette traduction, ces adresses traduites désignent toutes le module de connexion nomade RCG comme entité auprès de laquelle ces contenus peuvent être obtenus.

Puis le module relais nomade DMS-R2 enregistre les métadonnées reçues dans une mémoire ou un fichier de données, par exemple sur le support d'enregistrement SPR. Ce fichier forme une base de données pour le stockage de métadonnées.

En réponse à la requête UPnP, nommée "Browse", pour l'obtention de métadonnées de contenus, le module relais nomade DMS-R2 transmet au dispositif de restitution DMR2 les métadonnées demandées.

Le module relais nomade DMS-R2 fournit dans les métadonnées transmises, pour chaque contenu référencé par un serveur de contenus du réseau source, une adresse désignant comme entité auprès de laquelle le contenu considéré est susceptible d'être obtenu, une entité (le module de connexion nomade RCG ou, alternativement, le module relais nomade DMS-R2) exécuté par un équipement du réseau d'accueil RS2, cette entité étant apte à transmettre au module relais source DMS-R1 une requête d'accès audit contenu.

A l'étape 300, suite à une consultation par un utilisateur des métadonnées mémorisées par le module relais nomade DMS-R2 et une sélection effectuée par cet utilisateur d'un contenu à restituer, une requête d'obtention d'un des contenus sélectionné à partir de ces métadonnées est émise par dispositif de restitution UPnP, par exemple par le dispositif de restitution DMR2 localisé dans le terminal T21. Cette requête d'obtention de contenu est une requête de type "GET", conforme au protocole HTTP. Conformément au standard UPnP, cette requête contient une adresse URI du contenu à restituer. Du fait que les adresses URI contenues dans les métadonnées fournies par le module relais nomade DMS-R2 ont subi une traduction, cette adresse URI désigne le module de connexion nomade RCG comme l'entité auprès de laquelle le contenu considéré est susceptible obtenu. En alternative, elle désigne le module relais nomade DMS-R2.

A l'étape 301, la requête HTTP "GET" d'obtention de contenu est reçue par l'entité désignée dans l'adresse URI: soit par le module de connexion nomade RCG, soit par le module relais nomade DMS-R2, selon l'alternative choisie.

L'entité désignée (le module de connexion nomade RCG ou, alternativement, le module relais nomade DMS-R2) extrait de l'adresse URI reçue l'adresse URI, telle que générée à l'étape 240 par le module relais source DMS-R1 lors du transfert des métadonnées: l'adresse extraite désigne cette fois le module relais source DMS-R1 comme entité auprès de laquelle le contenu considéré peut être obtenu.

Le module de connexion nomade RCG ou, alternativement, le module relais nomade DMS-R2, génère ensuite une requête HTTP "GET", contenant l'adresse URI extraite puis la transmet à destination du module relais source DMS-R1.

Puis la requête HTTP "GET" d'obtention de contenu est encapsulée par le module de connexion nomade RCG dans une requête HTTPS.

A l'étape 305, la requête HTTPS d'obtention de contenu encapsulée est transmise par le module de connexion nomade RCG à travers la liaison sécurisée établie à l'étape 200 et parvient au module d'interconnexion CG2.

A l'étape 310, la requête HTTPS d'obtention de contenu encapsulée est transmise par le module d'interconnexion CG2 à travers la liaison sécurisée établie à l'étape 200 et parvient au module d'interconnexion CG1.

A l'étape 320, la requête HTTPS de restitution encapsulée est dés-encapsulée par le module d'interconnexion CG1, puis transmise sous forme de requête HTTP "GET" au module relais source DMS-R1.

A l'étape 325, la requête HTTP "GET" d'obtention de contenu est reçue par le module relais source DMS-R1 qui extrait de l'adresse URI reçue l'adresse URI obtenue à l'étape 240 par le module relais source DMS-R1 lors du transfert des métadonnées: l'adresse extraite désigne cette fois le serveur de contenu DMS11 comme entité auprès de laquelle le contenu considéré peut être obtenu.

Le module relais source DMS-R1 génère ensuite une requête HTTP "GET", contenant l'adresse URI extraite puis la transmet à destination du serveur de contenu DMS11.

A l'étape 330, la requête HTTP "GET" de restitution parvient au module relais source DMS-R1 qui la traite: il extrait l'adresse URI originale du contenu, telle que fournie par le serveur du contenu à transférer, puis génère une requête HTTP "GET", contenant cette adresse originale. Le module relais source DMS-R1 émet ensuite la requête HTTP "GET" ainsi constituée à destination du serveur de contenu stockant le contenu à restituer. Ce serveur est identifié à partir de l'adresse URI contenue dans la requête, c'est-à-dire du champ "CONTENT_URI" qui a subsisté aux différentes traductions d'adresse. En l'occurrence, la requête HTTP "GET" est envoyée à un des serveurs de contenus DMS11 et DMS12, par exemple au serveur de contenus DMS11.

A l'étape 340, après réception de la requête HTTP "GET", le serveur de contenus DMS11 envoie les données du contenu à restituer au module relais source DMS-R1. Ces données de contenu sont envoyées sous forme de paquets de données transmis au moyen du protocole HTTP.

A l'étape 350, le module relais source DMS-R1 émet à destination du module relais nomade DMS-R2 les paquets HTTP reçus.

A l'étape 360, ces paquets HTTP sont reçus par le module de d'interconnexion CG1 qui les encapsule dans des paquets de données conformes au protocole HTTPS avant de les transmettre via la liaison de communication sécurisée établie avec le module de connexion nomade RCG.

A l'étape 370, les paquets HTTPS parviennent au module de connexion nomade RCG qui les dés-encapsule, puis émet les paquets dés-encapsulés, sous forme de paquets HTTP, à destination directement du dispositif de restitution DMR2, sans passer par le module relais nomade DMS-R2.

A l'étape 380, le dispositif de restitution DMR2 restitue le contenu sélectionné à partir des paquets HTTP reçus.

Il est à noter que l'acheminement des requêtes HTTP "GET" pourrait être réalisé sans passer à travers le module relais nomade DMS-R2, ces requêtes pouvant être adressées directement au module relais source DMS-R1, et/ou ne pas passer par le module de connexion nomade si aucune contrainte de sécurité ne l'impose.

Le rôle du module relais nomade est principalement utilisé pour présenter une interface de commande, conforme au protocole qui est utilisé pour commander l'entité distante dans le réseau source: ce module relais nomade sert donc de représentant, dans le réseau d'accueil, de l'entité distante à commander (en l'occurrence les serveurs de contenus DMS11 et DMS12). En association avec le module de connexion nomade RCG, le module relais nomade DMS-R2 sert de relais de communication vis-à-vis du module relais source.

Il est à noter que le module relais nomade et le module de connexion nomade sont décrits ici comme étant deux modules indépendants afin d'identifier les différentes fonctions utiles à la mise en oeuvre de l'invention. Cependant ils peuvent être intégrés au sein d'un seul et même module logiciel ou d'un même programme, stocké sur le support d'enregistrement SPR.

Il est à noter que, aussi bien le module relais source que le module relais nomade peuvent représenter plusieurs entités distantes (en l'occurrence plusieurs serveurs de contenus DMS11 et DMS12).

Grâce à l'invention, et au support d'enregistrement, un utilisateur Bob peut accéder à des contenus stockés dans son réseau domestique à partir d'un terminal d'un autre utilisateur Alice, raccordé à un autre réseau domestique. Ainsi Bob peut partager avec Alice des contenus, notamment en demandant une restitution de ces contenus sur un terminal d'Alice, et ce bien que les réseaux domestiques de Bob et Alice soient dissociés géographiquement et non interconnectés.

## Revendications

1. Procédé de commande d'au moins une entité (DMS11, DMS12) d'un réseau source distant (RS1) à partir d'un réseau d'accueil local (RS2), le procédé comprenant :
- une étape d'exécution, par un équipement (T12, GW2) connecté au réseau d'accueil, d'un module logiciel intégrant un module relais (DMS-R2), dit module relais nomade, conçu pour communiquer avec un module relais (DMS-R1), dit module relais source, exécuté par un équipement (GW1) du réseau source et servant de relais de communication et d'entité mandataire vis-à-vis de ladite au moins une entité,
- une étape de mise en oeuvre par le module relais nomade d'un mécanisme de découverte d'entités conformes à un premier protocole, utilisable pour commander ladite entité à partir du réseau source, lors de laquelle le module relais nomade (DMS-R2) est reconnu en tant que serveur de contenus conforme au premier protocole,
- une étape de réception d'une première requête par le module relais nomade (DMS-R2) via une interface de commande, conforme au premier protocole,
- une étape d'envoi du module relais nomade (DMS-R2) au module relais source (DMS-R1), d'une deuxième requête destinée à être convertie par le module relais source (DMS-R1) en au moins une troisième requête conforme au premier protocole.

2. Procédé selon la revendication 1, dans lequel ladite entité est un serveur de contenu, le procédé comprenant une étape de fourniture d'une adresse d'au moins un contenu référencé par ledit serveur de contenus, ladite adresse désignant, comme entité auprès de laquelle ledit contenu est susceptible d'être obtenu, une entité (RCG, DMS-R2) exécuté par un équipement du réseau d'accueil, apte à transmettre au module relais source (DMS-R1) une requête d'accès audit contenu.

3. Procédé selon la revendication 1, dans lequel ladite deuxième requête est émise conformément à un deuxième protocole distinct du premier protocole.

4. Procédé selon la revendication 1, dans lequel ledit module logiciel intégrant le module relais nomade (DMS-R2) est stocké sur un support d'enregistrement (SPR) accessible à partir d'un équipement (T21, GW2) du réseau d'accueil.

5. Procédé selon la revendication 4, dans lequel ledit module logiciel comprend en outre un module de connexion (RCG), dit module de connexion nomade, le procédé comprenant en outre une étape d'établissement, au moyen dudit module de connexion nomade (RCG), d'une liaison de communication avec un équipement d'accès (GW1) au réseau distant, ladite deuxième requête étant transmise via ladite liaison de communication.

6. Procédé selon la revendication 4, dans lequel le support d'enregistrement est apte à être connecté à un équipement du réseau d'accueil.

7. Support d'enregistrement de données, accessible à partir d'un équipement (T21) d'un réseau d'accueil local (RS2),
sur lequel est stocké un module logiciel intégrant un module relais (DMS-R2), dit module relais nomade, conçu pour, lorsqu'il est exécuté par un équipement connecté au réseau d'accueil,
- communiquer avec un autre module relais (DMS-R1), dit module relais source, exécuté par un équipement (GW1) du réseau source (RS1) et servant de relais de communication et d'entité mandataire vis-à-vis de ladite au moins une entité,
- mettre en oeuvre un mécanisme de découverte d'entités conformes à un premier protocole, utilisable pour commander ladite entité à partir du réseau source, lors de laquelle le module relais nomade (DMS-R2) est reconnu en tant que serveur de contenus conforme au premier protocole,
- recevoir via une interface de commande, conforme au premier protocole, au moins une première requête et
- envoyer au module relais source (DMS-R1) une deuxième requête destinée à être convertie par le module relais source (DMS-R1) en au moins une troisième requête conforme au premier protocole.

8. Support selon la revendication 7, comprenant un module de connexion (RCG) apte à établir une liaison de communication avec un équipement d'accès (GW1) au réseau source.

9. Support selon la revendication 8, dans lequel sont mémorisées des données de connexion audit équipement d'accès (GW1) destinées à être utilisées par ledit module de connexion.

10. Module relais (DMS-R2), dit module relais nomade, pour la mise en oeuvre d'un procédé de commande d'au moins une entité (DMS11, DMS12) d'un réseau source distant (RS1) à partir d'un réseau d'accueil local (RS2), le module relais nomade étant intégré dans un module logiciel stocké sur un support d'enregistrement et comprenant :
- des moyens pour, lorsqu'il est exécuté par un équipement connecté au réseau d'accueil, communiquer avec un module relais (DMS-R1), dit module relais source, exécuté par un équipement (GW1) du réseau source et servant de relais de communication et d'entité mandataire vis-à-vis de ladite au moins une entité,
- des moyens de mise en oeuvre d'un mécanisme de découverte d'entités conformes à un premier protocole utilisable pour commander ladite entité à partir du réseau source, lors de laquelle le module relais nomade (DMS-R2) est reconnu en tant que serveur de contenus conforme au premier protocole,
- des moyens pour recevoir via une interface de commande, conforme au premier protocole, au moins une première requête et pour envoyer au module relais source (DMS-R1), une deuxième requête destinée à être convertie par le module relais source (DMS-R1) en au moins une troisième requête conforme au premier protocole.

11. Module relais (DMS-R1), dit module relais source, pour la mise en oeuvre d'un procédé de commande d'au moins une entité (DMS11, DMS12) d'un réseau source distant (RS1) à partir d'un réseau d'accueil local (RS2),
le module relais source (DMS-R1) servant de relais de communication et d'entité mandataire vis-à-vis de ladite au moins une entité et étant conçu pour, lorsqu'il est exécuté par un équipement du réseau source, communiquer avec un module relais (DMS-R2), dit module relais nomade, intégré dans un module logiciel chargé et exécuté par un équipement connecté au réseau d'accueil (RS2), le module relais nomade étant conçu pour
mettre en oeuvre un mécanisme de découverte d'entités conformes à un premier protocole, utilisable pour commander ladite entité à partir du réseau source, lors de laquelle le module relais nomade (DMS-R2) est reconnu en tant que serveur de contenus conforme au premier protocole et
recevoir via une interface de commande, conforme à un premier protocole utilisable pour commander ladite entité à partir du réseau source, au moins une première requête,
le module relais source (DMS-R1) étant apte à recevoir en provenance du module relais nomade (DMS-R2) une deuxième requête destinée à être convertie en une troisième requête conforme au premier protocole.

12. Module relais (DMS-R1) selon la revendication 11, le module relais source étant apte, lorsque ladite troisième requête est une requête d'obtention de métadonnées de contenus stockés dans plusieurs serveurs de contenus, à agréger les métadonnées reçues des différents serveurs de contenus en réponse à la troisième requête.

13. Module relais (DMS-R1) selon la revendication 12, le module relais source étant apte, à adapter les adresses de contenus comprises dans les métadonnées reçues ou agrégées pour que ces adresses puissent être interprétées par un équipement du réseau d'accueil.

14. Module relais (DMS-R1) selon la revendication 13, le module relais comprenant des fonctions de détection d'un serveur de contenus UPnP.

## Patentansprüche

1. Verfahren zum Steuern mindestens einer Einheit (DMS11, DMS12) eines fernen Quellnetzes (RS1) ausgehend von einem lokalen Empfangsnetz (RS2), wobei das Verfahren enthält:
- einen Schritt der Ausführung, durch eine mit dem Empfangsnetz verbundene Ausrüstung (T12, GW2), eines Softwaremoduls, das ein mobiles Relaismodul genanntes Relaismodul (DMS-R2) umfasst, welches konzipiert ist, um mit einem Quellrelaismodul genannten Relaismodul (DMS-R1) zu kommunizieren, das von einer Ausrüstung (GW1) des Quellnetzes ausgeführt wird und als Kommunikationsrelais und Proxy-Einheit gegenüber der mindestens einen Einheit dient,
- einen Schritt der Anwendung durch das mobile Relaismodul eines Mechanismus zur Entdeckung von einem ersten Protokoll, das verwendet werden kann, um die Einheit ausgehend vom Quellnetz zu steuern, entsprechenden Einheiten, während der das mobile Relaismodul (DMS-R2) als Inhaltsserver entsprechend dem ersten Protokoll erkannt wird,
- einen Schritt des Empfangs einer ersten Anforderung durch das mobile Relaismodul (DMS-R2) über eine Steuerschnittstelle, entsprechend dem ersten Protokoll,
- einen Schritt des Sendens vom mobilen Relaismodul (DMS-R2) zum Quellrelaismodul (DMS-R1) einer zweiten Anforderung, die dazu bestimmt ist, vom Quellrelaismodul (DMS-R1) in mindestens eine dritte Anforderung entsprechend dem ersten Protokoll umgewandelt zu werden.

2. Verfahren nach Anspruch 1, wobei die Einheit ein Inhaltserver ist, wobei das Verfahren einen Schritt des Lieferns einer Adresse mindestens eines vom Inhaltserver bezeichneten Inhalts enthält, wobei die Adresse als Einheit, von der der Inhalt erhalten werden kann, eine von einer Ausrüstung des Empfangsnetzes ausgeführte Einheit (RCG, DMS-R2) bezeichnet, die fähig ist, eine Zugriffsanforderung auf den Inhalt an das Quellrelaismodul (DMS-R1) zu übertragen.

3. Verfahren nach Anspruch 1, wobei die zweite Anforderung entsprechend einem zweiten Protokoll anders als das erste Protokoll gesendet wird.

4. Verfahren nach Anspruch 1, wobei das das mobile Relaismodul (DMS-R2) umfassende Softwaremodul auf einem Aufzeichnungsträger (SPR) gespeichert ist, der ausgehend von einer Ausrüstung (T21, GW2) des Empfangsnetzes zugänglich ist.

5. Verfahren nach Anspruch 4, wobei das Softwaremodul außerdem ein mobiles Verbindungsmodul genanntes Verbindungsmodul (RCG) enthält, wobei das Verfahren außerdem einen Schritt des Aufbaus, mittels des mobilen Verbindungsmoduls (RCG), einer Kommunikationsverbindung mit einer Zugriffsausrüstung (GW1) auf das ferne Netz enthält, wobei die zweite Anforderung über die Kommunikationsverbindung übertragen wird.

6. Verfahren nach Anspruch 4, wobei der Aufzeichnungsträger mit einer Ausrüstung des Empfangsnetzes verbunden werden kann.

7. Datenaufzeichnungsträger, der ausgehend von einer Ausrüstung (T21) eines lokalen Empfangsnetzes (RS2) zugänglich ist, auf dem ein Softwaremodul gespeichert ist, das ein mobiles Relaismodul genanntes Relaismodul (DMS-R2) umfasst, welches konzipiert ist, um, wenn es von einer mit dem Empfangsnetz verbundenen Ausrüstung ausgeführt wird,
- mit einem anderen Quellrelaismodul genannten Relaismodul (DMS-R1) zu kommunizieren, das von einer Ausrüstung (GW1) des Quellnetzes (RS1) ausgeführt wird und als Kommunikationsrelais und Proxy-Einheit gegenüber der mindestens einen Einheit dient,
- einen Mechanismus zur Entdeckung von einem ersten Protokoll, das verwendbar ist, um die Einheit ausgehend vom Quellnetz zu steuern, entsprechenden Einheiten anzuwenden, während der das mobile Relaismodul (DMS-R2) als dem ersten Protokoll entsprechender Inhaltserver erkannt wird,
- über eine Steuerschnittstelle entsprechend dem ersten Protokoll mindestens eine erste Anforderung zu empfangen, und
- an das Quellrelaismodul (DMS-R1) eine zweite Anforderung zu senden, die dazu bestimmt ist, vom Quellrelaismodul (DMS-R1) in mindestens eine dritte Anforderung entsprechend dem ersten Protokoll umgewandelt zu werden.

8. Träger nach Anspruch 7, der ein Verbindungsmodul (RCG) enthält, das eine Kommunikationsverbindung mit einer Zugriffsausrüstung (GW1) zum Quellnetz aufbauen kann.

9. Träger nach Anspruch 8, auf dem Verbindungsdaten mit der Zugriffsausrüstung (GW1) gespeichert sind, die dazu bestimmt sind, vom Verbindungsmodul verwendet zu werden.

10. Relaismodul (DMS-R2), mobiles Relaismodul genannt, zur Anwendung eines Steuerverfahrens mindestens einer Einheit (DMS11, DMS12) eines fernen Quellnetzes (RS1) ausgehend von einem lokalen Empfangsnetz (RS2), wobei das mobile Relaismodul in ein auf einem Aufzeichnungsträger gespeichertes Softwaremodul integriert ist und enthält:
- Einrichtungen, um, wenn es von einer mit dem Empfangsnetz verbundenen Ausrüstung ausgeführt wird, mit einem Quellrelaismodul genannten Relaismodul (DMS-R1) zu kommunizieren, das von einer Ausrüstung (GW1) des Quellnetzes ausgeführt wird und als Kommunikationsrelais und Proxy-Einheit gegenüber der mindestens einen Einheit dient,
- Einrichtungen zur Anwendung eines Mechanismus zur Entdeckung von einem ersten Protokoll, das verwendbar ist, um die Einheit ausgehend vom Quellnetz zu steuern, entsprechenden Einheiten, während der das mobile Relaismodul (DMS-R2) als dem ersten Protokoll entsprechender Inhaltserver erkannt wird,
- Einrichtungen, um über eine Steuerschnittstelle entsprechend dem ersten Protokoll mindestens eine erste Anforderung zu empfangen, und um an das Quellrelaismodul (DMS-R1) eine zweite Anforderung zu senden, die dazu bestimmt ist, vom Quellrelaismodul (DMS-R1) in mindestens eine dritte Anforderung entsprechend dem ersten Protokoll umgewandelt zu werden.

11. Relaismodul (DMS-R1), Quellrelaismodul genannt, für die Anwendung eines Steuerverfahrens mindestens einer Einheit (DMS11, DMS12) eines fernen Quellnetzes (RS1) ausgehend von einem lokalen Empfangsnetz (RS2),
wobei das Quellrelaismodul (DMS-R1) als Kommunikationsrelais und Proxy-Einheit gegenüber der mindestens einen Einheit dient und konzipiert ist, um, wenn es von einer Ausrüstung des Quellnetzes ausgeführt wird, mit einem mobiles Relaismodul genannten Relaismodul (DMS-R2) zu kommunizieren, das in ein von einer mit dem Empfangsnetz (RS2) verbundenen Ausrüstung geladenes und ausgeführtes Softwaremodul integriert ist, wobei das mobile Relaismodul konzipiert ist, um
einen Mechanismus zur Entdeckung von einem ersten Protokoll, das verwendbar ist, um die Einheit ausgehend vom Quellnetz zu steuern, entsprechenden Einheiten anzuwenden, während der das mobile Relaismodul (DMS-R2) als dem ersten Protokoll entsprechender Inhaltserver erkannt wird, und
über eine Steuerschnittstelle entsprechend einem ersten Protokoll, das verwendbar ist, um die Einheit ausgehend vom Quellnetz zu steuern, mindestens eine erste Anforderung zu empfangen,
wobei das Quellrelaismodul (DMS-R1) vom mobilen Relaismodul (DMS-R2) kommend eine zweite Anforderung empfangen kann, die dazu bestimmt ist, in eine dritte Anforderung entsprechend dem ersten Protokoll umgewandelt zu werden.

12. Relaismodul (DMS-R1) nach Anspruch 11, wobei das Quellrelaismodul, wenn die dritte Anforderung eine Anforderung zum Erhalt von Metadaten von in mehreren Inhaltsservern gespeicherten Inhalten ist, die von den verschiedenen Inhaltsservern als Antwort auf die dritte Anforderung empfangenen Metadaten zusammenfassen kann.

13. Relaismodul (DMS-R1) nach Anspruch 12, wobei das Quellrelaismodul die in den empfangenen oder zusammengefassten Metadaten enthaltenen Adressen von Inhalten so anpassen kann, dass diese Adressen von einer Ausrüstung des Empfangsnetzes interpretiert werden können.

14. Relaismodul (DMS-R1) nach Anspruch 13, wobei das Relaismodul Erfassungsfunktionen eines Inhaltservers UPnP enthält.

## Claims

1. Method for controlling at least one entity (DMS11, DMS12) of a remote source network (RS1) from a local home network (RS2), the method comprising:
- a step of execution, by a device (T12, GW2) connected to the home network, of a software module incorporating a relay module (DMS-R2), termed nomadic relay module, designed to communicate with a relay module (DMS-R1), termed source relay module, executed by a device (GW1) of the source network and serving as communications relay and proxy entity in relation to said at least one entity,
- a step of implementation by the nomadic relay module of a mechanism for discovering entities compliant with a first protocol, usable for controlling said entity from the source network, upon which the nomadic relay module (DMS-RC) is recognized as content server compliant with the first protocol,
- a step of reception of a first request by the nomadic relay module (DMS-R2) via a control interface, compliant with the first protocol,
- a step of sending from the nomadic relay module (DMS-R2) to the source relay module (DMS-R1) a second request intended to be converted by the source relay module (DMS-R1) into at least one third request compliant with the first protocol.

2. Method according to Claim 1, in which said entity is a content server, the method comprising a step of providing an address of at least one content referenced by said content server, said address designating, as entity from which said content may be obtained, an entity (RCG, DMS-R2) executed by a home network device, suitable for transmitting to the source relay module (DMS-R1) a request for access to said content.

3. Method according to Claim 1, in which said second request is issued in compliance with a second protocol distinct from the first protocol.

4. Method according to Claim 1, in which said software module incorporating the nomadic relay module (DMS-R2) is stored on a recording medium (SPR) accessible from a device (T21, GW2) of the home network.

5. Method according to Claim 4, in which said software module further comprises a connection module (said RCG), termed nomadic connection module, the method further comprising a step of establishing, using said nomadic connection module (RCG), a communications link with a device (GW1) for accessing the remote network, said second request being transmitted via said communications link.

6. Method according to Claim 4, in which the recording medium is capable of being connected to a device of the home network.

7. Data recording medium, accessible from a device (T21) of a local home network (RS2), on which is stored a software module incorporating a relay module (DMS-R2), termed nomadic relay module, designed in order to, when it is executed by a device connected to the home network,
- communicate with another relay module (DMS-R1), termed source relay module, executed by a device (GW1) of the source network (RS1) and serving as communications relay and proxy entity in relation to said at least one entity,
- implement a mechanism for discovering entities compliant with a first protocol, usable for controlling said entity from the source network, upon which the nomadic relay module (DMS-R2) is recognized as content server compliant with the first protocol,
- receive via a control interface, compliant with the first protocol, at least one first request and
- send to the source relay module (DMS-R1) a second request intended to be converted by the source relay module (DMS-R1) into at least one third request compliant with the first protocol.

8. Medium according to Claim 7, comprising a connection module (RCG) capable of establishing a communications link with a device (GW1) for accessing the source network.

9. Medium according to Claim 8, in which are stored data concerning connection to said access device (GW1) and intended to be used by said connection module.

10. Relay module (DMS-R2), termed nomadic relay module, for the implementation of a method for controlling at least one entity (DMS11, DMS12) of a remote source network (RS1) from a local home network (RS2), the nomadic relay module being incorporated into a software module stored on a recording medium and comprising:
- means for, when it is executed by a device connected to the home network, communicating with a relay module (DMS-R1), termed source relay module, executed by a device (GW1) of the source network and serving as communications relay and proxy entity in relation to said at least one entity,
- means for implementing a mechanism for discovering entities compliant with a first protocol usable for controlling said entity from a source network, upon which the nomadic relay module (DMS-R2) is recognized as content server compliant with the first protocol.
- means for receiving via a control interface, compliant with the first protocol, at least one first request and for sending to the source relay module (DMS-R1), a second request intended to be converted by the source relay module (DMS-R1) into at least one third request compliant with the first protocol.

11. Relay module (DMS-R1), termed source relay module, for the implementation of a method for controlling at least one entity (DMS11, DMS12) of a remote source network (RS1) from a local home network (RS2),
the source relay module (DMS-R1) serving as communications relay and proxy entity in relation to said at least one entity and being designed to, when it is executed by a device of the source network, communicate with a relay module (DMS-R2), termed nomadic relay module, incorporated into a software module loaded and executed by a device connected to the home network (RS2), the nomadic relay module being designed to implement a mechanism for discovering entities compliant with a first protocol, usable for controlling said entity from the source network, upon which the nomadic relay module (DMS-R2) is recognized as content server compliant with the first protocol and receive via a control interface, compliant with a first protocol usable for controlling said entity from the source network, at least one first request,
the source relay module (DMS-R1) being capable of receiving from the nomadic relay module (DMS-R2) a second request intended to be converted into a third request compliant with the first protocol.

12. Relay module (DMS-R1) according to Claim 11, the source relay module being capable, when said third request is a request to obtain metadata of content stored in several content servers, of aggregating the metadata received from the different content servers in reply to the third request.

13. Relay module (DMS-R1) according to Claim 12, the source relay module being capable of adapting the content addresses included in the metadata received or aggregated so that these addresses may be interpreted by a device of the home network.

14. Relay module (DMS-R1) according to Claim 13, the relay module including functions for detection of a UPnP content server.
